# EUROPEAN PATENT APPLICATION

(11) **EP 4 474 422 A1**
(43) Date of publication of application: **11.12.2024**
(21) Application number: 23177781.4
(22) Date of filing: 06.06.2023
(51) Int. Cl.: C08L 23/22

(54) **AN ACOUSTIC DAMPING MATERIAL WITH IMPROVED FIRE RESISTANCE**

(71) Applicant: Sika Technology AG, 6340 Baar (CH)
(72) Inventor: SCHWAB, Frederick, 60594 Frankfurt (DE); MAZUROWSKI, Markus, 65462 Ginsheim (DE); VIERTEL, Johannes, 71665 Vaihingen (DE)
(74) Representative: Sika Patent Attorneys

(57) **Abstract**

The invention is directed to an acoustic damping material comprising at least one at 25 °C liquid rubber **LR,** at least one component **CP** selected from the group consisting of butyl rubber **BR,** natural or synthetic polyisoprene **PI** and polyisobutylenes **PIB,** at least one component **D** selected from the list consisting of ammonium polyphosphate **APP** and melamine compound **MC,** at least one component **E** selected from phosphates, pyrophosphates, polyphosphates, organic and inorganic phosphonates, organic and inorganic phosphinates, and at least one solid particulate filler **FM.**

The acoustic damping material is suitable for use in damping of undesired vibrations and noise in mechanical structures and components of manufactured articles. Since it also provides good heat shielding performance in case of fire it is especially suited to be used to dampen vibrations of battery storage containers in transportation vehicles.

## Description

### Technical field

The present invention relates to compositions used for damping of vibrations and noise in mechanical structures of manufactured articles. In particular, the present invention relates compositions, which are suitable for use in damping of vibrations of components and structures contained in articles of automotive industry, home appliances, and general industry.

### Background of the invention

Acoustic damping materials are widely used in automotive, home appliance and general industries for reducing of undesired vibrations, structure borne noise, and air borne noise. For example, in automotive vehicles, it is desirable to prevent transfer of vibrations generated by the motors, pumps, gears and other dynamic force generators through the body of the vehicle into the passenger compartment. Structure borne noise is produced when the vibrations generated by a dynamic force generator are transmitted through a supporting structure, typically a frame or other hollow structure, to a noise emitting surface, such as a metallic or plastic panel, which transforms the mechanical vibrations into sound waves. Structure borne noise and vibrations in general can be effectively reduced by application of vibration damping materials directly to the structures and surfaces of components subjected to vibrational disturbances, such as surfaces of vehicle panels, floors, and shells of machines, washers, and dryers.

Acoustic damping materials used for damping of vibrations of panels and plates are commonly provided in form of pre-formed single- and multi-layer damping elements or as liquid compositions, which are applied directly on surface of a substrate. Damping materials designed for damping of vibrations and noise in hollow structures such as cavities are usually provided in form of cavity filler inserts comprising an expandable composition and one or more attaching members, which are capable of holding the cavity filler insert in a desired position within the hollow structure.

Pre-formed single- and multiple-layer damping elements comprise a damping layer, which is in direct contact with a surface of the substrate to be damped against vibrational disturbances. The damping layer is capable of dissipating kinetic energy of the vibrating surface into heat energy through extension and compression of the material of the damping layer. Widely used materials for damping layers include bitumen- and rubber-based compositions comprising relatively high amounts of particulate fillers and varying amount of additives, in particular plasticizers, rheology modifiers, and drying agents. Pre-formed single- and multiple-layer damping elements often comprise a layer of an adhesive composition, such as a pressure sensitive adhesive (PSA) or a hotmelt adhesive, to enable bonding of the damping layer to a surface of a substrate, such as a panel or floor of an automotive vehicle. Liquid applied damping systems are typically thermally drying, gelling, or reactive compositions, which are applied on the surface of the substrate in liquid state, for example by spraying.

Acoustic damping materials used for damping of vibrations of panels and plates can also be provided in form of constrained layer damping elements, which contain a damping layer and a stiff outer layer that "constraints" the damping layer thereby sandwiching it between the stiff outer layer and the surface of the substrate to be damped. The stiffness of the outer layer is generally a factor of ten times higher than the stiffness of the layer of damping material. Commonly used materials for the outer top layer include, for example, aluminum and fiber glass fabrics. Constrained layer dampers are typically more effective in damping of undesired vibrations than single-layer damping elements but they are also more expensive to produce.

Cavity filler inserts are used for damping of air borne noise within the cavity of a hollow structure component and to prevent vibrations from being transmitted through the walls of the cavity. A cavity filler insert typically consists of a damping material and at least one attachment member capable of holding the cavity filler insert in a desired position within the hollow structure. The damping material of the cavity filler insert is typically formulated as an expandable composition, which upon activation, such as at elevated temperature, expands and forms a seal around the interior surface of the wall of the cavity. Expandable damping materials suitable for damping of air borne noise within a cavity are commonly referred to as "acoustic baffles".

One of the main application areas of acoustic damping elements includes the interior of automotive vehicles and larger structures therein. With the growing importance of e-mobility, battery storage containers amount to a significant amount of structural space in the vehicle structure and therefore need dampening as well. Due to the electrification of vehicles and the associated risk of fire, especially caused by the battery, intumescent systems can be applied inside or outside the battery storage containers. These intumescent systems are typically spray-applied epoxy resin-based coatings as they are often used in the construction industry.

There is thus a need for a novel type of acoustic damping material, which contributes to safety against fire hazards in vehicle use and provides similar or improved vibration and noise damping properties compared to the State-of-the-Art rubber-based damping materials.

### Summary of the invention

The object of the present invention is to provide a material for use in damping of undesired vibrations and noise in mechanical structures and components of manufactured articles, which provides good heat shielding performance in case of fire and provides similar or improved vibration and noise damping properties compared to State-of-the-Art rubber-based acoustic damping materials.

The subject of the present invention is an acoustic damping material as defined in claim 1.

It was surprisingly found out that the acoustic damping material according to the invention exhibits similar or even improved vibration and noise damping properties compared to commercially available rubber-based acoustic damping materials. In particular, it was found that the acoustic damping material of the present invention exhibits a high heat shielding performance when exposed to an open flame, which makes it especially suitable for use in damping of vibrations and noise of structures and components of e-mobility vehicles.

Other subjects of the present invention are presented in other independent claims. Preferred aspects of the invention are presented in the dependent claims.

### Brief description of the Drawings

Fig. 1 shows a cross-section of a vibration and noise damping element (1) comprising an adhesive layer (2) having a first surface (3) and a second surface (3'), and a constrained layer (4) covering the second surface (3') of the adhesive layer (2).
Fig. 2 shows a cross-section of a vibration damped system comprising a substrate (6) having a noise emitting surface (7) and a vibration and noise damping element (1) comprising an adhesive layer (2) having a first surface (3) and a second surface (3'), and a constrained layer (4) covering the second surface (3') of the adhesive layer (2).

### Detailed description of the invention

The subject of the present invention is an acoustic damping material comprising:
a) 6 - 25 wt.-%, based on the total weight of the acoustic damping material, of at least one at 25 °C liquid rubber **LR** selected from the group consisting of at 25 °C liquid polybutenes and at 25 °C liquid polyisobutylenes, preferably at 25 °C liquid polyisobutylenes;
b) 3 - 15 wt.-%, based on the total weight of the acoustic damping material, of at least one component **CP** selected from the group consisting of butyl rubber **BR,** natural or synthetic polyisoprene **PI** and polyisobutylenes **PIB** with a weight average molecular weight of ≥ 250,000 g/mol, preferably polyisobutylenes **PIB** with a weight average molecular weight of ≥ 250,000 g/mol;
c) preferably 4 - 15 wt.-%, based on the total weight of the acoustic damping material, of at least one hydrocarbon resin **HR;**
d) 37.5 - 52.5 wt.-%, based on the total weight of the acoustic damping material, of at least one component **D** selected from the list consisting of ammonium polyphosphate **APP** and melamine compound **MC,** preferably ammonium polyphosphate **APP;**
e) 0.5 - 2.5 wt.-%, based on the total weight of the acoustic damping material, of at least one component **E** selected from phosphates, pyrophosphates, polyphosphates, organic and inorganic phosphonates, organic and inorganic phosphinates of the elements of the main groups II, III or IV or the transition group elements Fe, Zn, Ti, Mn, Zr and Mo, preferably of the elements of the main groups II and III and Zn, especially Al;
f) f) at least one solid particulate filler **FM,** preferably at least one solid particulate mineral filler **FM.**

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column and depending on the molecule, tetrahydrofurane as a solvent, at a temperature of 35 °C or 1 ,2,4-trichlorobenzene as a solvent, at 160 °C.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1%.

The term "softening point" refers to a temperature at which compound softens in a rubber-like state, or a temperature at which the crystalline portion within the compound melts. The softening point can be determined by Ring and Ball measurement conducted according to DIN EN 1238 standard.

The term "room temperature" designates a temperature of 23°C.

The acoustic damping material of the present invention is especially suitable for use in damping of undesired vibrations and noise in mechanical structures components of a manufactured article, such as an automotive vehicle or a product of home appliance or general industry. In these applications, the acoustic damping material, typically provided in form of a shaped article, such as a layer or pad, is applied directly on a surface a mechanical structure or component, which is subjected to vibrational disturbances. The acoustic damping material can be brought to a form of a suitably shaped article by using conventional extrusion and/or calendaring or hot-pressing techniques. The type and amount of the components a) to f) of the acoustic damping material can be optimized such that that the efficiency of the material in dissipating kinetic energy of the vibrating surface into heat energy through extension and compression of the damping material is maximized in the application relevant temperature range.

The acoustic damping material of the present invention is preferably essentially free of bitumen. The expression "essentially free" is understood to mean that the acoustic damping may contain only traces of bitumen, such as less than 0.5 wt.-%, preferably less than 0.25 wt.-%, more preferably less than 0.1 wt.-%, still more preferably less than 0.01 wt.-%, based on the total weight of the acoustic damping material. The term "bitumen" designates in the present disclosure blends of heavy hydrocarbons, having a solid consistency at room temperature. These are normally obtained as vacuum residue from refinery processes, which can be distillation (topping or vacuum) and/or conversion processes, such as thermal cracking and visbreaking, of suitable crude oils. Furthermore, the term "bitumen" also designates natural and synthetic bitumen as well as bituminous materials obtained from the extraction of tars and bituminous sands.

Furthermore, it may be preferably that the acoustic damping material is substantially free of cross-linking/curing agents, such as free-radical cross-linking agents, for example peroxides. The phrase "substantially free" is intended to mean that if an amount of a cross-linking agent is found in the acoustic damping material, said amount is so negligible that the effect of the cross-linking agent cannot be obtained. In other words, the amount of a cross-linking agent found in the acoustic damping material cannot initiate curing of the polymeric components or can initiate only a substantially negligible amount of cross-linking. According to one or more embodiments, the acoustic damping material contains less than 0.15 wt.-%, preferably less than 0.1 wt.-%, more preferably less than 0.01 wt.-%, even more preferably 0 wt.-%, based on the total weight of the acoustic damping material, of cross-linking/curing agents.

The acoustic damping material comprises 6 - 25 wt.-%, based on the total weight of the acoustic damping material, of at least one at 25 °C liquid rubber **LR** selected from the group consisting of at 25 °C liquid polybutenes and at 25 °C liquid polyisobutylenes, preferably at 25 °C liquid polyisobutylenes.

An amount of less than 6 wt.-% leads to insufficient peel strength and loss factor values. An amount of more than 25 wt.-% leads to low heat shielding performance.

Preferably, the amount of the at 25 °C liquid rubber **LR** is 8 - 22.5 wt.-%, preferably 10 - 20 wt.-%, most preferably 13.5 - 20 wt.-%, based on the total weight of the acoustic damping material. This is advantageous with respect to peel strength, loss factor values and heat shielding performance.

The term "at 25 °C liquid polybutene" preferably designates in the present disclosure olefin oligomers comprising isobutylene and/or 1-butene and/or 2-butene. The ratio of the C₄-olefin isomers can vary by manufacturer and by grade.

The term "at 25 °C liquid polyisobutylene" preferably designates in the present disclosure polyolefins and olefin oligomers of isobutylene, preferably containing at least 75 %, more preferably at least 85 % of repeat units derived from isobutylene.

Particularly suitable at 25 °C liquid polybutenes and polyisobutylenes have an average molecular weight of not more than 5'000 g/mol, preferably not more than 3'000 g/mol, more preferably not more than 2'500 g/mol, even more preferably not more than 2'000 g/mol, still more preferably not more than 1'500 g/mol.

Particularly suitable at 25 °C liquid polybutenes and polyisobutylenes have a polydispersity index (Mw/Mn) determined by gel permeation-chromatography (GPC) of not more than 7.5, more preferably not more than 5.0, such as in the range of 0.5 - 5.0, preferably 1.0 - 4.5, more preferably 1.0 - 3.5, even more preferably 1.25 - 2.5.

Liquid polybutenes are commercially available, for example, under the trade name of Indopol^{®} H- and L-series (from Ineos Oligomers), under the trade name of Infineum^{®} C-series and Parapol^{®} series (from Infineum), and under the trade name of PB-series (Daelim). Liquid polyisobutylenes (PIBs) are commercially available, for example, under the trade name of Glissopal^{®} V-series (from BASF) and and under the trade name of Dynapak^{®}-series (from Univar GmbH, Germany).

The acoustic damping material comprises 3 - 15 wt.-%, based on the total weight of the acoustic damping material, of at least one component **CP** selected from the group consisting of butyl rubber **BR,** natural or synthetic polyisoprene **PI** and polyisobutylenes **PIB** with a weight average molecular weight of ≥ 250,000 g/mol. Preferably, the at least one component **CP** is polyisobutylenes **PIB** with a weight average molecular weight of ≥ 250,000 g/mol.

An amount of less than 3 wt.-% leads to insufficient peel strength values. An amount of more than 15 wt.-% leads to leads to low heat shielding performance.

Preferably, the acoustic damping material comprises 3.5 - 12 wt.-%, preferably 4 - 10 wt.-%, more preferably 4.5 - 6.5 wt.-%, based on the total weight of the acoustic damping material, of at least one component **CP.** This is advantageous with respect to heat shielding performance, a higher value for the loss factor at 20 °C and with respect to high values for peel strength.

The term "butyl rubber" designates in the present document a polymer derived from a monomer mixture containing a major portion of a C₄ to C₇ monoolefin monomer, preferably an isoolefin monomer and a minor portion, such as not more than 30 wt.-%, of a C₄ to C₁₄ multiolefin monomer, preferably a conjugated diolefin. The preferred C₄ to C₇ monoolefin monomer may be selected from the group consisting of isobutylene, 2-methyl-1-butene, 3-methyl-1-butene, 2-methyl-2-butene, 4-methyl-1-pentene, and mixtures thereof, preferably isobutylene.

The preferred C₄ to C₁₄ multiolefin comprises a C₄ to C₁₀ conjugated diolefin. The preferred C₄ to C₁₀ conjugated diolefin may be selected from the group comprising isoprene, butadiene, 2,4-dimethylbutadiene, piperyline, 3-methyl-1,3-pentadiene, 2,4-hexadiene, 2-neopentyl-1 ,3-butadiene, 2-methyl-1,5-hexadiene, 2,5-dimethyl-2,4-hexadiene, 2-methyl-1,4-pentadiene, 2-methyl-1,6-heptadiene, cyclopentadiene, methylcyclopentadiene, cyclohexadiene, 1-vinyl-cyclohexadiene and mixtures thereof, preferably isoprene. Most preferably the butyl rubber **BR** is a polymer derived from isobutylene and isoprene.

Preferably, the at least one butyl rubber **BR** is selected from the group consisting of butyl rubber and halogenated butyl rubber, preferably butyl rubber, chlorobutyl rubber and bromobutyl rubber, more preferably butyl rubber and bromobutyl rubber, most preferably bromobutyl rubber.

Preferred butyl rubber **BR** have a Mooney viscosity (ML 1+8 at 125°C.) of 10 - 60 MU (Mooney units), preferably 20 -50 MU, preferably 25 -40 MU. Preferably, Mooney viscosity refers to the viscosity measure of rubbers. It is defined as the shearing torque resisting rotation of a cylindrical metal disk (or rotor) embedded in rubber within a cylindrical cavity. The dimensions of the shearing disk viscometer, test temperatures, and procedures for determining Mooney viscosity are defined in ASTM D1646.

The at least one natural or synthetic polyisoprene **PI** is preferably natural polyisoprene, most preferably natural rubber.

Preferably the at least one natural or synthetic polyisoprene **PI** has an average molecular weight of ≥100'000 g/mol, preferably 100'000 - 2'000'000 g/mol, more preferably 100'000 - 1'000'000 g/mol.

Natural rubber is a polymer of isoprene (methylbuta-1,3-diene) but is distinguished from synthetic polyisoprene which is the product of a metallic catalyst reaction.

Preferably, the natural or synthetic polyisoprene **PI** has a Mooney viscosity at 100° C. (ML 1+4) of from 30 to 120, more preferably from 40 to 65. The Mooney viscosity test referred to herein is in accordance with ASTM D-1646.

The polyisobutylenes **PIB** have a weight average molecular weight of ≥ 250'000 g/mol, preferably ≥ 500'000 g/mol, more preferably between 750'000 g/mol and 3'000'000 g/mol, most preferably between 750'000 g/mol and 1'500'000 g/mol.

Suitable polyisobutylenes **PIB** are generally polymers having a polyisobutylene skeleton in the main or a side chain. Fundamentally, such a polyisobutylene polymer can be prepared by polymerizing isobutylene alone or as a combination of isobutylene and n-butene, isoprene, or butadiene in the presence of a Lewis acid catalyst such as aluminum chloride or boron trifluoride. Suitable polyisobutylene polymers are commercially available under the trade designation VISTANEX (Exxon Chemical Co.), HYCAR (Goodrich Corp.), OPPANOL (BASF AG), and JSR BUTYL (Japan Butyl Co., Ltd.).

Preferably, the acoustic damping material comprises 4-15 wt.-%, based on the total weight of the acoustic damping material, of at least one hydrocarbon resin **HR.**

Preferably, the amount of the at least one hydrocarbon resin **HR** is 5 - 12 wt.- %, preferably 5.5 - 10 wt.-%, most preferably 6.5 - 9.5 wt.-%, based on the total weight of the acoustic damping material. This is advantageous with respect to favorable loss factor values.

The term "hydrocarbon resin" preferably designates in the present document synthetic resins made by polymerizing mixtures of unsaturated monomers obtained from petroleum based feedstocks, such as by-products of cracking of natural gas liquids, gas oil, or petroleum naphthas. These types of hydrocarbon resins are also known as "petroleum resins" or as "petroleum hydrocarbon resins". The hydrocarbon resins include also pure monomer aromatic resins, which are prepared by polymerizing aromatic monomer feedstocks that have been purified to eliminate color causing contaminants and to precisely control the composition of the product.

Examples of suitable hydrocarbon resins to be used as the at least one hydrocarbon resin **HR** include C5 aliphatic resins, mixed C5/C9 aliphatic/aromatic resins, aromatic modified C5 aliphatic resins, cycloaliphatic resins, mixed C5 aliphatic/cycloaliphatic resins, mixed C9 aromatic/cycloaliphatic resins, mixed C5 aliphatic/cycloaliphatic/C9 aromatic resins, aromatic modified cycloaliphatic resins, C9 aromatic resins, as well hydrogenated versions of the aforementioned resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins preferably have a hydrogenation level, for example, of 50 %, 70 %, or 90 %.

The type of the at least one hydrocarbon resin **HR** is not particularly restricted in the present invention. The selection of the at least one hydrocarbon resin **HR** depends, at least partially, on the type of the other components contained in the binder matrix of the acoustic damping material, in particular of the type of the polymer component **P.**

Preferably, the at least one hydrocarbon resin **HR** has:
- a softening point determined by using the Ring and Ball method as defined in DIN EN 1238 standard of at least 70 °C, preferably at least 80 °C, more preferably in the range of 70 - 180 °C, preferably 80 - 150 °C, more preferably 90 - 120 °C and/or, preferably and;
- an average molecular weight (Mₙ) in the range of 250 - 7500 g/mol, preferably 300 - 5000 g/mol.

Suitable hydrocarbon resins are commercially available, for example, under the trade name of Wingtack^{®} series, Wingtack^{®} Plus, Wingtack^{®} Extra, and Wingtack^{®} STS (all from Cray Valley); under the trade name of Escorez^{®} 1000 series, Escorez^{®} 2000 series, and Escorez^{®} 5000 series (all from Exxon Mobile Chemical); under the trade name of Novares^{®} T series, Novares^{®} TT series, Novares^{®} TD series, Novares^{®} TL series, Novares^{®} TN series, Novares^{®} TK series, and Novares^{®} TV series (all from RÜTGERS Novares GmbH); and under the trade name of Kristalex^{®}, Plastolyn^{®}, Piccotex^{®}, Piccolastic^{®} and Endex^{®} (all from Eastman Chemicals).

The acoustic damping material comprises f) at least one solid particulate filler **FM,** preferably at least one solid particulate mineral filler **FM.**

Preferably, the acoustic damping material comprises 5 - 35 wt.-%, preferably 10 - 30 wt.-%, more preferably 15 - 25 wt.-%, even more preferably 17.5 - 22.5 wt.-%, of the at least one solid particulate filler **FM,** based on the total weight of the acoustic damping material.

The at least one solid particulate filler **FM** is preferably present in the acoustic damping material in form of solid particles, preferably having a d₉₀ particle diameter of not more than 2.5 mm, more preferably not more than 1.5 mm. The term "particle diameter d₉₀" refers in the present disclosure to a particle diameter below which 90 % of all particles by volume have a smaller diameter than the d₉₀ value. The term "particle diameter" refers in the present disclosure to the area-equivalent spherical diameter of a particle (Xₐᵣₑₐ). The particle diameter distribution is preferably measured using dynamic image analysis method conducted according to ISO 13322-2:2006 standard. For determination of the particle diameter distribution, the particles are preferably dispersed in air, preferably using air pressure dispersion method. The measurements can be conducted using any type of dynamic image analysis apparatus, such as a Camsizer XT device (trademark of Retsch Technology GmbH).

It is also preferred that the at least one solid particulate filler **FM** is an inert mineral filler and has a water-solubility of less than 0.1 g/100 g water, more preferably less than 0.05 g/100 g water, even more preferably less than 0.01 g/100 g water, at a temperature of 20 °C. The solubility of a compound in water can be measured as the saturation concentration, where adding more compound does not increase the concentration of the solution, i.e. where the excess amount of the substance begins to precipitate. The term "inert mineral filler" refers in the present disclosure to mineral fillers, which unlike mineral binders, are not reactive, i.e. do not undergo a hydration reaction in the presence of water.

According to one or more embodiments, the at least one solid particulate filler **FM** is selected from the group consisting of calcium carbonate, magnesium carbonate, calcium oxide, talc, kaolin, diatomaceous earth, wollastonite, feldspar, montmorillonite, dolomite, silica, preferably fumed silica, cristobalite, iron oxide, iron nickel oxide, strontium ferrite, barium-strontium ferrite, hollow ceramic spheres, hollow glass spheres, hollow organic spheres, glass spheres, mica, barium sulfate, and graphite.

The acoustic damping material may optionally contain additives, which are customary for acoustic damping materials. Examples of suitable additives include, for example, pigments, thixotropic agents, thermal stabilizers, drying agents, and flame retardants. These additives, if used at all, preferably comprise not more than 25 wt.-%, more preferably not more than 15 wt.-%, even more preferably not more than 10 wt.-%, of the total weight of the acoustic damping material.

The acoustic damping material comprises d) 37.5 - 52.5 wt.-%, based on the total weight of the acoustic damping material, of the at least one component **D** selected from the list consisting of ammonium polyphosphate **APP** and melamine compound **MC,** preferably ammonium polyphosphate **APP.**

An amount of less than 37.5 wt.-% leads to insufficient heat shielding performance and loss factor values. This can be seen, for example, in table 3 in the comparison of E1 with Ref.5. An amount of more than 52.5 wt.-% also leads to insufficient heat shielding performance and loss factor values. This can be seen, for example, in table 3 in the comparison of E1 with Ref.6.

Preferably, the acoustic damping material comprises 40 -50 wt.-%, more preferably 42.5 - 47.5 wt.-%, based on the total weight of the acoustic damping material, of at least one component **D** selected from the list consisting of ammonium polyphosphate **APP** and melamine compound **MC,** preferably ammonium polyphosphate **APP.**

This is advantageous with respect to heat shielding performance and a higher value for the loss factor at 20 °C.

The ammonium polyphosphate **APP** preferably has a particle size of ≦100 µm, in particular 50 µm-5 µm.

The ammonium polyphosphate **APP** preferably has a particle diameter d₅₀ of ≦100 µm, in particular 50 µm-5 µm, preferably measured using dynamic image analysis method conducted according to ISO 13322-2:2006 standard.

It is also advantageous if the ammonium polyphosphate **APP** is an ammonium polyphosphate of the formula (NH₄PO₃)ₙ with n from 200-2000, preferably 600-1500.

Substance names beginning with "poly", such as polyphosphate or polyol, refer to substances that formally contain two or more of the functional groups in their name per molecule.

Such an ammonium polyphosphate **APP** is commercially available, for example, as FR CROS 484 from Budenheim, Germany or Exolit^{®} AP 422 from Clariant, Germany.

The melamine compound **MC** is preferably selected from the group consisting of melamine (1,3,5-triazine-2,4,6-triamine), precondensed melamine derivatives, melamine salts and adducts.

More preferably, the melamine compound **MC** is selected from melamine, melamine cyanurate, melamine borate, melamine orthophosphate, melamine pyrophosphate, dimelamine pyrophosphate and melamine polyphosphate, even more preferred from melamine pyrophosphate, dimelamine pyrophosphate and melamine polyphosphate, more preferred from dimelamine pyrophosphate and melamine polyphosphate, most preferred dimelamine pyrophosphate.

The melamine compound **MC** preferably has a particle diameter d₅₀ of ≦100 µm, in particular 50 µm-5 µm, preferably measured using dynamic image analysis method conducted according to ISO 13322-2:2006 standard.

Such an melamine compound **MC** is commercially available, for example, as FR CROS 513 (melamin polyphosphat) from Budenheim, Germany or FR CROS 685 (dimelamin pyrophosphat) from Budenheim, Germany.

In case the at least one component **D** consists of both ammonium polyphosphate **APP** and melamine compound **MC,** the weight ratio of ammonium polyphosphate **APP** to melamine compound **MC** (APP/MC) is preferably 5:1 to 1:1, more preferably 4:1 to 2:1, most preferably 3.5:1 to 2.5:1.

The acoustic damping material comprises e) 0.5 - 2.5 wt.-%, based on the total weight of the acoustic damping material, of at least one component **E** selected from phosphates, pyrophosphates, polyphosphates, organic and inorganic phosphonates, organic and inorganic phosphinates of the elements of the main groups II, III or IV or the transition group elements Fe, Zn, Ti, Mn, Zr and Mo, preferably of the elements of the main groups II and III and Zn, especially Al.

An amount of less than 0.5 wt.-% leads to insufficient heat shielding performance and loss factor values. This can be seen, for example, in table 3 in the comparison of E1 with Ref.1, respectively E2 with Ref.2 and E3 with Ref.3. An amount of more than 2.5 wt.-% also leads to insufficient heat shielding performance and loss factor values. This can be seen, for example, in table 3 in the comparison of E1 with Ref.4.

Preferably, the acoustic damping material comprises 0.75 - 2 wt.-%, more preferably 0.8 - 1.5 wt.-%, based on the total weight of the acoustic damping material, of the at least one component **E.**

This is advantageous with respect to heat shielding performance and a higher value for the loss factor at 20 °C.

Preferably, the at least one component **E** is selected from the list consisting of monozinc phosphate, trizinc phosphate, zinc pyrophosphate, zinc polyphosphate, monoaluminium phosphate, trialuminium phosphate and aluminium metaphosphate as well as condensation products of single components of said list, preferably monoaluminium phosphate, trialuminium phosphate and aluminium metaphosphate and condensation products of single components of said list.

Such an aluminium phosphate is commercially available, for example, as FR CROS 759 (condensed aluminum polyphosphate) from Budenheim, Germany.

A preferred acoustic damping material comprises
- 8 - 22.5 wt.-%, preferably 13.5 - 20 wt.-%, based on the total weight of the acoustic damping material, of at least one at 25 °C liquid rubber **LR** selected from the group consisting of at 25 °C liquid polybutenes and at 25 °C liquid polyisobutylenes, preferably at 25 °C liquid polyisobutylenes;
- 3.5 - 12 wt.-%, preferably 4.5 - 6.5 wt.-%, based on the total weight of the acoustic damping material, of polyisobutylenes **PIB** with a weight average molecular weight of ≥ 250,000 g/mol;
- preferably 5-12 wt.-%, more preferably 6.5 - 9.5 wt.-%, based on the total weight of the acoustic damping material, of at least one hydrocarbon resin **HR;** and
- 5 - 35 wt.-%, preferably 17.5 - 22.5 wt.-%, of the at least one solid particulate filler **FM,** based on the total weight of the acoustic damping material;
- 40 -50 wt.-%, preferably 42.5 - 47.5 wt.-%, of at least one component **D** selected from the list consisting of ammonium polyphosphate **APP** and melamine compound **MC** selected from dimelamine pyrophosphate and melamine polyphosphate, most preferred dimelamine pyrophosphate, preferably ammonium polyphosphate **APP,** based on the total weight of the acoustic damping material; and
- 0.75 - 2 wt.-%, more preferably 0.8 - 1.5 wt.-%, of at least one component **E** selected from monoaluminium phosphate, trialuminium phosphate and aluminium metaphosphate and condensation products of single components of said list, based on the total weight of the acoustic damping material.

Preferably, the acoustic damping material has the following properties:
Adhesion as measured in the experimental section (30 min @ RT at ec sheet, according to AA-0007 (BMW): ≥ 1 N/cm, preferably ≥ 2 N/cm, more preferably ≥ 3 N/cm.

Adhesion as measured in the experimental section (30 min @ 160°C at ec sheet, according to AA-0007 (BMW): ≥ 0.5 N/cm, preferably ≥ 1 N/cm, more preferably ≥ 2 N/cm.

Heat shielding properties as measured in the experimental section with respect to the maximal temperature reached during the measured 10 minutes: ≤ 350 °C, preferably ≤ 325 °C, more preferably ≤ 300 °C.

Another subject of the present invention is a method for producing an acoustic damping material according to the present invention, the method comprising mixing the components a) to f) with each other at an elevated temperature, preferably at a temperature in the range of 120 - 200 °C, more preferably 130 - 180 °C, until a homogeneously mixed mixture is obtained.

The term "homogeneously mixed mixture" refers in the present document to compositions, in which the individual constituents are distributed substantially homogeneously in the composition. Furthermore, a homogeneously mixed mixture is preferably a multi-phase mixture. For a person skilled in the art it is clear that within such mixed compositions there may be regions formed, which have a slightly higher concentration of one of the constituents than other regions and that a 100 % homogeneous distribution of all the constituents is generally not achievable. Such mixed compositions with "imperfect" distribution of constituents, however, are also intended to be included by the term "homogeneously mixed mixture" in accordance with the present invention.

Any conventional type of a mixing apparatus can be used in mixing of the components a) to f) with each other. The mixing step can be conducted as a batch process using a batch-type mixer, such as a Brabender, a Banbury, a roll mixer or as a continuous process using a continuous-type mixer, such as an extruder, in particular a single- or a twin-screw extruder.

The homogeneously mixed mixture obtained from the mixing step can be subsequently cooled to a temperature of below 100 °C, more preferably of below 80 °C. In case an extruder apparatus is used in the mixing step, the homogeneously mixed mixture is preferably extruded through an extruder die before the cooling step. The cooled homogeneously mixed mixture is storage stable at normal storage conditions. The term "storage stable" refers in the present disclosure to materials, which can be stored at specified storage conditions for long periods of time, such as at least one month, in particular at least 3 months, without any significant changes in the application properties of the material. The "typical storage conditions" refer to temperatures of not more than 60 °C, in particular not more than 50 °C.

The homogeneously mixed mixture can furthermore be processed into a form of a shaped article, such as a sheet or a film by using any conventional techniques, such as extrusion, calendaring, and hot-pressing techniques. The shaping step is preferably conducted before the cooling step. According to one or more embodiments, the homogeneously mixed mixture is extruded through a flat die to form a sheet of film, which is preferably cooled between a pair of calender cooling rolls. Shaped articles having specific dimensions can be produced from the extruded sheet of film, for example, by punch or die cutting.

Another subject of the present invention is use of the acoustic damping material according to the present invention for damping of vibrations and/or noise in transportation vehicles or white goods, preferably in transportation vehicles, more preferably applied to battery storage containers of transportation vehicles. The acoustic damping material is most preferably applied inside or outside of the battery storage containers of e-mobility vehicles.

Another subject of the present invention is a vibration and noise damping element (1) comprising:
i) An adhesive layer (2) having a first and a second surface (3, 3') and
ii) A constrained layer (4) covering at least a portion of the second surface of the adhesive layer,
wherein the adhesive layer (2) comprises or is composed of the acoustic damping material of the present invention.

The vibration and noise damping element according to this embodiment is generally known as "constrained layer damper".

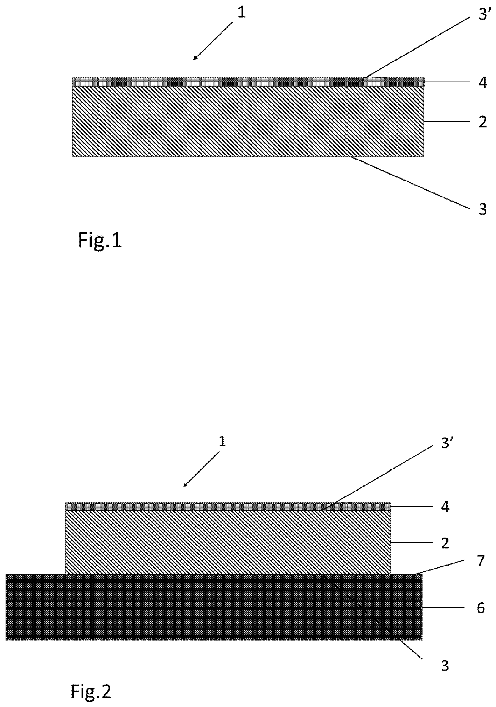

A cross-section of the vibration and noise damping element according to the present invention is shown in Fig. 1.

According to one or more embodiments, the adhesive layer (2) is a sheet-like element having a first and a second major surfaces defining a thickness there between and a length and width at least 5 times, preferably at least 15 times, more preferably at least 25 times greater than the thickness of the sheet-like element. The term "thickness" preferably refers to a dimension of a sheet-like element that is measured in a plane that is perpendicular to the length and width dimensions of the element. In embodiments, in which the adhesive layer is sheet-like element, the first and second surfaces of the adhesive layer correspond to the first and second major surfaces of a sheet-like element.

The constrained layer (4) and the adhesive layer (2) are preferably directly connected to each other over their opposing surfaces. The expression "directly connected" is understood to mean in the context of the present invention that no further layer or substance is present between the two layers and that the opposing surfaces of the layers are directly adhered to each other. According to one or more embodiments, the constrained layer covers at least 50 %, preferably at least 65 %, more preferably at least 75 % of the first surface of the adhesive layer. According to one or more further embodiments, the constrained layer covers substantially the entire area of the second surface of the adhesive layer. The expression "substantially entire area" is understood to mean at least 90%, preferably at least 95 %, more preferably at least 98.5 % of the total area.

The adhesive layer (2) comprises or preferably is composed of the acoustic damping material of the present invention. The preferred embodiments for the acoustic damping material described before also apply to the acoustic damping material in the adhesive layer (2).

According to one or more embodiments, the adhesive layer has a maximum thickness in the range of 0.5 - 5 mm, preferably 0.5 - 3 mm, more preferably 0.5 - 2 mm, even more preferably 0.5 - 1 mm and/or a density in the range of 1 - 4 g/cm³, preferably 1 - 3 g/cm³, more preferably 1 - 2 g/cm³ and/or a mass per unit area of 0.5 - 5 kg/m², preferably 0.6 - 4 kg/m², more preferably 0.7 - 3 kg/m².

Preferably, the vibration and noise damping element has the following properties:
- Temperature at which the maximum loss factor is measured (T @LFₘₐₓ) is between 5°C or 25°C, preferably between 15°C or 25°C.
- Value of the maximum loss factor (LFₘₐₓ) is ≥0.15, preferably ≥0.175, most preferably ≥0.2.

Preferably, the loss factor is determined by using the measurement method as defined in ISO 6721 standard, more preferably as described in the experimental section.

The vibration and noise damping element further comprises, in addition to the adhesive layer, a constrained layer covering at least a portion of the second surface of the adhesive layer. The vibration and noise damping element according to these embodiments are generally known as "constrained layer dampers". The adhesive layer and the constrained layer are preferably directly connected to each other over their opposing surfaces.

According to one or more embodiments, the constrained layer (4) is a metal sheet, preferably aluminum or steel sheet or a polymeric sheet, preferably glass fiber reinforced polymer sheet. The thickness of the constrained layer is not particularly restricted but the use of constrained layers that are thinner than the adhesive layer is generally preferred. Preferred thickness also depends on the material of the constrained layer. According to one or more embodiments, the constrained layer has a thickness of 0.05 - 1.5 mm, preferably 0.1 - 1.25 mm, more preferably 0.1 - 1.0 mm. According to one or more embodiments, the constrained layer is a metal sheet having a thickness of 0.05 - 0.5 mm, preferably 0.05 - 0.4 mm. According to one or more further embodiments, the constrained layer is a polymeric sheet having a thickness of 0.1 - 1.2 mm, preferably 0.25 - 1.0 mm.

It is preferred that the constrained layer has an elastic modulus, which is larger than that of the adhesive layer, such larger by at least the factor 3, preferably at least the factor 5, more preferably at least a factor of 10, wherein the elastic modulus is measured by using the method as defined in ISO 6892-1:2016 standard (for metallic sheets) or as defined in ISO 527-2 standard (for polymeric sheets).

Another subject of the present invention is a method for producing a vibration and noise damping element of the present invention, the method comprising steps of:
i) Providing an adhesive layer having a first and a second surface, comprising or composed of the acoustic damping material of the present invention,
ii) Applying a constrained layer on the second surface of the adhesive layer.

Step i) can be conducted by any conventional techniques known to a person skilled in the art. For example, the acoustic damping material can be first melt-processed in an extruder apparatus and then extruded though an extruder die, preferably a flat die, into a form of an adhesive layer. Alternatively, the acoustic damping material of the present invention can be processed into an adhesive layer by using calendering or hot-pressing techniques.

Another subject of the present invention is a method for applying a vibration and noise damping element according to the present invention to a noise emitting surface of a substrate, the method comprising steps of:
I) Providing a vibration and noise damping element according to the present invention,
II) Contacting the first surface of the adhesive layer of the vibration and noise damping element with the noise emitting surface and applying sufficient pressure to form an adhesive bond.

The substrate having a noise emitting surface can be any type of shaped article, such as a panel, a sheet, or a container, composed, for example, of metal, plastic, or fiber reinforced plastic. Preferably, the substrate is a container, especially a battery storage container, composed of metal, most preferably a battery storage metal container of a transportation vehicle.

Preferably, the adhesive layer and/or the substrate of step II) are not exposed to heating during or after step II), preferably until 3 months after step II), especially heating above 100 °C, more preferably heating for more than 5 min, preferably more than 15 min, at temperatures above 120 °C. Such exposure to heat can be supplied by using any conventional techniques, such as heating in an oven, heating by air stream, or heating with infrared (IR)-radiation.

Still another subject of the present invention is a vibration damped system comprising a substrate (6) having a noise emitting surface (7) and a vibration and noise damping element (1) according to the present invention, comprising an adhesive layer (2) having a first and a second surface (3, 3') and a constrained layer (4) covering at least a portion of the second surface of the adhesive layer, wherein least a portion of the first surface (3) of the adhesive layer (2) is adhesively bonded, preferably directly bonded, to the noise emitting surface (7).

A cross-section of a vibration damped system is shown in Figure 2.

### Examples

The raw materials shown in Table 1 were used in the compositions for the adhesive layer as shown in the table 2.

**Table 1**

| | |
|---|---|
| **LR** | PIB 32, at 25 °C liquid synthetic polyisobutylene, Mn: 1300 g/mol, Braskem |
| **PIB** | Polyisobutene, average molecular weight distribution Mw/Mn = 2.4, average molecular weight Mw (weight average) = 1'050'000 g/mol, BASF |
| **HR** | Wingtack 95, Hydrocarbon resin, Softening Point: 98°C, Mn: 1,700 g/mol, Cray Valley |
| **Calcit** | Calcit |
| **Silicate** | Thixotropic agent on silicate basis |
| **CaO** | Calcium oxide |
| **Pigment** | Carbon black |
| **Antioxidant** | Sterically hindered phenolic primary antioxidant |
| **Al polyphosphate** | FR CROS 759, condensed aluminum polyphosphate, Budenheim, Germany |
| **APP** | FR CROS 484, ammonium polyphosphate (APP), particle diameter d₅₀ between 5 µm - 50 µm, Budenheim, Germany |
| **Dim. pyrophosphate** | FR CROS 685, dimelamine pyrophosphate, Budenheim, Germany |
| **M.** polyphosphate | FR CROS 513, melamin polyphosphate, Budenheim, Germany |

### Preparation of the compositions

The inventive acoustic damping materials of the examples E1 to E3 as well as the reference examples Ref.1 to Ref.6 shown in table 3 used in the adhesive layer were prepared according to the following procedure.

In a first step, the components **BR, PI, HR** and a half of the calcit were mixed in a batch type mixer. After that, the remaining raw materials were added constantly over a time of 1 hour and mixed during 20 min. The mixed compositions were then calendered.

For the following tests, test samples (vibration and noise damping elements) were produced with an adhesive layer of a thickness of 0.6 mm consisting of compositions E1 to E3, respectively reference examples Ref.1 to Ref.6. On top of this adhesive layer, an aluminum layer (constrained layer) of a thickness of 0.15 mm was added. The test results are shown in table 3.

### Measurement of heat shielding properties ("Heat shielding, Max. Temp. [°C]")

To perform the heat shield test, the formulations were applied manually on steel plates DC04 (length 200 mm* width 100 mm* thickness 0,8 mm) with a layer thickness of 1 mm. Two thermocouples made of nickel/chrome nickel were fixed on the back, approx. 3 cm from the lower edge and in the middle of the steel plate by spot welding of nickel strips on the top of the thermocouples. These thermocouples were connected to a data logger (175-T3, from Testo) before the start of the test, which recorded the temperature curve every 10 seconds. The coated and wired plate was placed on a metal bracket with a 45° angle and flamed with a horizontally mounted Teclu burner, with a maximum power of 3 W. In addition, the air supply of the burner was opened by one revolution, so that hardly a yellow glowing part of the flame was visible. The tip of the flame was placed 1.5 cm from the surface of the applied formulation and about 4 cm from the lower end of the coated plate. The duration of the fire exposure was 10 minutes. The values shown in table 3 shown the maximal temperature reached during the measured 10 minutes.

### Measurement of the adhesion/peel strength ("Peel strength")

The peel strength test was performed according to the BMW group standard, Adhesives and sealing materials used in the body shop Damping pad, Requirements and testing, GS 97028-16:2012-02 page 4, table 1: Adhesion ("Peel-resistance of sound deadening and stiffening materials in the body shop "), AA-0007, edition 2018-10. The test samples had a length / width of 20 cm x 3 cm.

The following curing conditions were used:
"Peel strength 160 °C": 30 min @ 160°C at ec sheet
«Peel strength RT": 30 min @ RT at ec sheet

### Measurement of the loss factor ("Loss factor")

The loss factors for the test specimen were determined by using the measurement method as defined in ISO 6721 standard. The measurements were conducted at 200 Hz anti-resonance point and at a temperature range of 20 to 60°C using a commercially available loss factor tester. The test samples had a length / width of 20 cm x 1 cm.

It is advantageous if the highest value of the loss factor in table 3 is measured at 10°C or 20°C, preferably 20°C, because this temperature is the most common operating temperature in a vehicle.

### Measurement of the expansion ("Expansion factor ")

The expansion is quantified for each sample by measuring the thickness of the butyl layer bevor and after the heat shield test. The expansion factors are given by the quotient of the initial thickness and resulting thickness of the intumescence foam after the heat shield test.

**Table 2**

| **Raw material** | **Ref.1** | **Ref.2** | **Ref.3** | **E1** | **E2** | **E3** | **Ref.4** | **Ref.5** | **Ref.6** |
|---|---|---|---|---|---|---|---|---|---|
| PIB | 4.6 | 4.6 | 4.6 | 4.6 | 4.6 | 4.6 | 4.6 | 4.6 | 4.6 |
| LR | 19 | 19 | 19 | 19 | 19 | 19 | 19 | 19 | 19 |
| HR | 7 | 7 | 7 | 7 | 7 | 7 | 7 | 7 | 7 |
| Calcit | 19.1 | 19.1 | 19.1 | 18.1 | 18.1 | 18.1 | 16.1 | 28.1 | 8.1 |
| Silicate | 2 | 2 | 2 | 2 | 2 | 2 | 2 | 2 | 2 |
| CaO | 2.9 | 2.9 | 2.9 | 2.9 | 2.9 | 2.9 | 2.9 | 2.9 | 2.9 |
| Pigment | 0.2 | 0.2 | 0.2 | 0.2 | 0.2 | 0.2 | 0.2 | 0.2 | 0.2 |
| Antioxidant | 0.2 | 0.2 | 0.2 | 0.2 | 0.2 | 0.2 | 0.2 | 0.2 | 0.2 |
| Al polyphosphate | - | - | - | 1 | 1 | 1 | 3 | 1 | 1 |
| APP | 45 | 33.75 | 33.75 | 45 | 33.75 | 33.75 | 45 | 35 | 55 |
| Dim. pyrophosphate | | 11.25 | | | 11.25 | | | | |
| M. polyphosphate | | | 11.25 | | | 11.25 | | | |
| **Total wt.-%** | 100 | 100 | 100 | 100 | 100 | 100 | 100 | 100 | 100 |
| | | | | | | | | | |
| Peel strength 160 °C [N/cm] | 1-2 | 1-2 | 1-2 | 2-3 | 2-3 | 2-3 | 2-3 | 4-5 | 2-3 |
| Peel strength RT [N/cm] | 4-5 | 3-4 | 3-4 | 3-4 | 3-4 | 3-4 | 4-5 | 4-5 | 2.9 |
| Heat shielding, Max. Temp. [°C] | **371** | **338** | **342** | **275** | **295** | **307** | **387** | **364** | **495** |
| Expansion factor | **7.27** | **4.00** | **3.00** | **5.45** | **9.09** | **4.55** | **4.00** | **4.00** | **1.00** |
| Loss factor | | | | | | | | | |
| 30°C | 0.171 | 0.147 | 0.150 | 0.189 | 0.206 | 0.164 | 0.163 | 0.164 | 0.184 |
| 20°C | **0.148** | **0.122** | **0.120** | **0.176** | **0.185** | **0.140** | **0.156** | **0.139** | **0.151** |
| 10°C | 0.104 | 0.087 | 0.086 | 0.122 | 0.109 | 0.088 | 0.109 | 0.098 | 0.095 |
| 0°C | 0.072 | 0.062 | 0.061 | 0.087 | 0.067 | 0.057 | 0.071 | 0.069 | 0.059 |

## Claims

1. An acoustic damping material comprising:
a) 6 - 25 wt.-%, based on the total weight of the acoustic damping material, of at least one at 25 °C liquid rubber **LR** selected from the group consisting of at 25 °C liquid polybutenes and at 25 °C liquid polyisobutylenes, preferably at 25 °C liquid polyisobutylenes;
b) 3-15 wt.-%, based on the total weight of the acoustic damping material, of at least one component **CP** selected from the group consisting of butyl rubber **BR,** natural or synthetic polyisoprene **PI** and polyisobutylenes **PIB** with a weight average molecular weight of ≥ 250,000 g/mol, preferably polyisobutylenes **PIB** with a weight average molecular weight of ≥ 250,000 g/mol;
c) preferably 4 - 15 wt.-%, based on the total weight of the acoustic damping material, of at least one hydrocarbon resin **HR;**
d) 37.5 - 52.5 wt.-%, based on the total weight of the acoustic damping material, of at least one component **D** selected from the list consisting of ammonium polyphosphate **APP** and melamine compound **MC,** preferably ammonium polyphosphate **APP;**
e) 0.5 - 2.5 wt.-%, based on the total weight of the acoustic damping material, of at least one component **E** selected from phosphates, pyrophosphates, polyphosphates, organic and inorganic phosphonates, organic and inorganic phosphinates of the elements of the main groups II, III or IV or the transition group elements Fe, Zn, Ti, Mn, Zr and Mo, preferably of the elements of the main groups II and III and Zn, especially Al;
f) f) at least one solid particulate filler **FM,** preferably at least one solid particulate mineral filler **FM.**

2. The acoustic damping material according to claim 1, wherein the amount of the at 25 °C liquid rubber **LR** is 8 - 22.5 wt.-%, preferably 10 - 20 wt.- %, most preferably 13.5 - 20 wt.-%, based on the total weight of the acoustic damping material.

3. The acoustic damping material according to any one of previous claims, wherein the amount of the at least one component **D** selected from the list consisting of ammonium polyphosphate **APP** and melamine compound **MC,** is 40 -50 wt.-%, more preferably 42.5 - 47.5 wt.-%, based on the total weight of the acoustic damping material.

4. The acoustic damping material according to any one of previous claims, wherein the ammonium polyphosphate **APP** has a particle diameter d₅₀ of ≦100 µm, in particular 50 µm-5 µm, preferably measured using dynamic image analysis method conducted according to ISO 13322-2:2006 standard.

5. The acoustic damping material according to any one of previous claims, wherein the melamine compound **MC** is selected from melamine, melamine cyanurate, melamine borate, melamine orthophosphate, melamine pyrophosphate, dimelamine pyrophosphate and melamine polyphosphate, even more preferred from melamine pyrophosphate, dimelamine pyrophosphate and melamine polyphosphate, more preferred from dimelamine pyrophosphate and melamine polyphosphate, most preferred dimelamine pyrophosphate.

6. The acoustic damping material according to any one of previous claims, wherein the amount of the at least one component **E** is 0.75 - 2 wt.-%, more preferably 0.8 - 1.5 wt.-%, based on the total weight of the acoustic damping material.

7. The acoustic damping material according to any one of previous claims, wherein the at least one component **E** is selected from the list consisting of monozinc phosphate, trizinc phosphate, zinc pyrophosphate, zinc polyphosphate, monoaluminium phosphate, trialuminium phosphate and aluminium metaphosphate as well as condensation products of single components of said list, preferably monoaluminium phosphate, trialuminium phosphate and aluminium metaphosphate and condensation products of single components of said list.

8. The acoustic damping material according to any one of previous claims, wherein the amount of the at least one component **CP** is 3.5 - 12 wt.-%, preferably 4 - 10 wt.-%, more preferably 4.5 - 6.5 wt.-%, based on the total weight of the acoustic damping material.

9. The acoustic damping material according to any one of previous claims, wherein the amount of the at least one hydrocarbon resin **HR** is 5 - 12 wt.-%, preferably 5.5 - 10 wt.-%, most preferably 6.5 - 9.5 wt.-%, based on the total weight of the acoustic damping material.

10. The acoustic damping material according to any one of previous claims, wherein the at least one at 25 °C liquid rubber **LR** has an average molecular weight of not more than 5'000 g/mol, preferably not more than 3'000 g/mol, more preferably not more than 2'500 g/mol, even more preferably not more than 2'000 g/mol, still more preferably not more than 1'500 g/mol.

11. The acoustic damping material according to any one of previous claims, wherein the at least one component **CP** is at least one butyl rubber polyisobutylenes **PIB** with a weight average molecular weight of ≥ 500'000 g/mol, preferably between 750'000 g/mol and 3'000'000 g/mol, more preferably between 750'000 g/mol and 1'500'000 g/mol.

12. Use of the acoustic damping material according to any one of claims 1-11 for damping of vibrations and/or noise in transportation vehicles or white goods, preferably in transportation vehicles, more preferably applied to battery storage containers of transportation vehicles.

13. A vibration and noise damping element (1) comprising:
i) An adhesive layer (2) having a first surface (3) and a second surface (3') and
ii) A constrained layer (4) covering at least a portion of the second surface (3') of the adhesive layer (2), wherein the adhesive layer (2) comprises or is composed of the acoustic damping material according to any one of claims 1-11.

14. The vibration and noise damping element (1) according to claim 13, wherein the adhesive layer (2) has a thickness of 0.5 - 5 mm, preferably 0.5 - 3 mm, more preferably 0.5 - 2 mm, even more preferably 0.5 - 1 mm and/or a mass per unit area of 0.5 - 5 kg/m², preferably 0.6 - 4 kg/m², more preferably 0.7 - 3 kg/m².

15. A method for applying a vibration and noise damping element (1) according to claim 13 or 14 to a noise emitting surface (7) of a substrate (6), the method comprising steps of:
I) Providing the vibration and noise damping element (1) according to claim 13 or 14,
II) Contacting the first surface (3) of the adhesive layer (2) of the vibration and noise damping element (1) with the noise emitting surface (7) and applying sufficient pressure to form an adhesive bond.

16. A vibration damped system comprising a substrate (6) having a noise emitting surface (7) and a vibration and noise damping element (1) according to claim 13 or 14, wherein least a portion of the first surface (3) of the adhesive layer (2) is adhesively bonded, preferably directly bonded, to the noise emitting surface (7), wherein said substrate (6) is preferably a container, more preferably a battery storage container, composed of metal, most preferably a battery storage metal container of a transportation vehicle.
